## Europäisches Patentamt
## European Patent Office
## Office européen des brevets

(11) Publication number: **0 031 665**
A2

(12)

# EUROPEAN PATENT APPLICATION

(21) Application number: 80304510.3

(51) Int. Cl.³: **B 32 B 27/08**

(22) Date of filing: **15.12.80**

(30) Priority: 28.12.79 US 107818

(43) Date of publication of application: 08.07.81
Bulletin 81/27

(84) Designated Contracting States: **BE DE FR GB IT NL**

(71) Applicant: **MOBIL OIL CORPORATION, 150 East 42nd
Street, New York New York 10017 (US)**

(72) Inventor: **Weiner, Milton Lawrence, 77 Shalimar Drive,
Rochester New York (US)**

(74) Representative: **Cooper, John Anthony et al, Mobil
Court 3 Clements Inn, London WC2A 2EB (GB)**

(54) **Two-layer heat sealable packaging film.**

(57) Two-layer, heat-sealable biaxially oriented films and their production by melt extrusion coating are disclosed. The substrate which forms most of the film thickness is a blend of polypropylene and/or propylene-ethylene copolymer, and poly(1-butene) or 1-butene ethylene copolymer and is capable of forming a weak heat seal to itself. The second layer coated on the substrate is poly(1-butene) or a copolymer of 1-butene and up to 10 mole percent of ethylene, and will form a strong heat seal. The films are intended for use in packaging.

# TWO-LAYER HEAT SEALABLE PACKAGING FILM

This invention relates to two-layer films having a wide range of heat sealing temperatures. The films comprise a substrate of a blend of a propylene homopolymer or copolymer, and a polymer or copolymer of butene-1; and a surface layer on one side of the substrate which has a lower melting point than the substrate. The second layer is relied on for imparting heat sealability and comprises poly(1-butene) or a copolymer of butene-1 and ethylene containing up to 10% by weight of ethylene. The films of this invention can be produced by extrusion of the substrate, stretching the substrate in the machine direction, extrusion coating the substrate with the heat sealable coating layer material and stretching the resulting two-layer film perpendicular to the machine direction.

Oriented polypropylene film has become a useful and widely used packaging film because of its good moisture barrier properties, stiffness, high-strength, and good optical properties. For widest utility, it is desired that the films be capable of being heat sealed over a broad range of temperatures. One means to achieve heat-sealability has been the application of a heat-sealable coating to the surface of the film. However, the application of a coating in a separate operation, particularly one applied from an aqueous emulsion or solvent solution, is quite costly.

An alternate and less costly method of achieving heat-sealability is the coextrusion of a surface layer on one or both surfaces of a substrate. The material comprising the surface layer is selected so it melts at a lower temperature than the underlying substrate. Coextruded oriented films have been prepared in which the oriented polypropylene substrate or core is encased in skins comprised of ethylene/propylene copolymer, l-butene homopolymer or l-butene/ethylene copolymer, for instance. Such films are described in U.S. Patent 4,125,662.

While films such as those described in U.S. Patent 4,125,662 can be produced more economically than many of the prior art films and have a desirable broad sealing range, they exhibit a tendency to stick to the heated rolls (machine direction orientation rolls) which perform the function of orienting the film in a longitudinal direction. Consequently, it is necessary, when processing such films, to maintain the machine direction orientation rolls at a sufficiently low temperature to prevent this undesirable sticking. This constraint on permissible machine direction orientation roll temperatures has the practical consequence of limiting orientation process speeds to lower levels than are economically desirable.

An alternate method of manufacturing multilayer films, and one that circumvents the problem of sticking to the machine direction orientation rolls, consists of preforming a solidified sheet of the polypropylene substrate, orienting it in the longitudinal direction by passage over heated rolls driven at differential speeds as before, and then extrusion coating with the low melting skin composition followed by transverse direction orientation. If the skin composition is applied to only one surface of the substrate, an added benefit is realized--namely, that the uncoated surface is relatively insensitive, by virtue of its higher melting point, to the hot surfaces that it may contact in certain types of packaging machines. More specifically, in horizontal form and fill applications, the closure of the package is effected solely by heat sealing one surface of the film to itself. For purposes of closure, therefore, there is no need for the opposite surface to be coated, and in fact, such coating can be detrimental because it can cause undesirable sticking to the heated sealing platens.

Even though heat sealability of only one surface is required for closrue on horizontal form and fill equipment, it is desirable for esthetic purposes to be able to achieve a low level of heat sealability when the opposing surface of the film contacts itself. The locus of such seals would be the juncture of the flange-like seals which effect closure of the back of the package with those which effect closure of the top and bottom of the package.

The function of these uncoated to uncoated seals is not to contribute to the closure of the package but merely to fasten down projecting corners of the back seal and thus to produce a more attractive package. Therefore, the level of seal strength required is not high. It is, however, higher than would be provided by an oriented polypropylene surface when subjected to a sealing temperature that is sufficiently low so that undesirable shrinkage of the film does not occur. It is desirable therefore to provide a two-layer film comprising a thin surface layer which provides strong heat seals when sealed to itself and a thicker, higher melting substrate layer which provides relatively weak but functionally useful seals when sealed to itself.

Accordingly, it is an object of this invention to provide biaxially oriented, heat sealable films capable of being heat sealed over a broad temperature range.

It is another object of this invention to provide biaxially oriented, heat sealable films which can be economically produced. Still another more specific object of this invention is the provision of such biaxially oriented heat sealable films which can be produced without the problem of the lower melting point layers sticking to the machine direction orientation rollers during longitudinal orientation.

Yet another object of this invention is the provision of two-layer films capable of forming a strong heat seal between the surfaces of the heat sealable layer and a weaker seal between the surfaces of the substrate layer at normal heat sealing temperatures.

These objects are attained by a two-layer, heat-sealable biaxially oriented film of specific components which is prepared by extruding a substrate layer comprising 80-99% of the thickness of the final film, preferably 90-99% of the thickness; orienting the substrate layer in the machine direction in the conventional manner; extrusion coating the substrate with a heat sealable coating layer; and stretching the coated film perpendicular to the machine direction.

The substrate layer which forms 80-99% of the total film thickness comprises a blend of (1) from 0 to 85 weight percent of polypropylene, (2) from 0 to 95 weight percent of copolymer of propylene and up to 8 weight percent of ethylene, and (3) from 5 to 35 weight percent of poly(1-butene) or a copolymer of 1-butene and up to 10 mole percent of ethylene. The proportions of the polymers (1), (2) and (3) are selected so that the melting and sealing temperatures of the substrate layer have a higher melting point than the second layer and so that the substrate layer is capable of forming at least a weak heat seal with itself at temperatures which are suitable for effecting a strong heat seal between surfaces of the second layer. Another factor of consideration in the formation of the substrate is that it should not be subject to excessive shrinkage or destruction at heat sealing temperatures.

The second layer which has a lower melting point than the substrate layer and forms 1-20% of the total film thickness comprises poly(1-butene) or a copolymer of 1-butene and up to 10 mole percent of ethylene.

It should be recognized that both the substrate layer and the second layer, which has a lower melting point than the substrate layer, are heat sealable to themselves. However, it is the second layer which is primarily relied upon for its heat sealability to itself. The substrate layer forms a relatively weak but functionally useful seal and is capable of performing without sticking to machine direction orientation rollers or other heated surfaces encountered in horizontal form and fill equipment.

The invention is illustrated by the following nonlimiting examples. In the following examples, single layer oriented films corresponding to the above-described substrate layer were prepared to evaluate the heat sealability of the substrate layer to itself.

### Example 1

A single layer oriented polypropylene film was prepared by melt-blending 36.0 g of a polypropylene resin (melt flow index, 4; heptane insolubles, 94%). A film was then prepared by first compression-molding the desired composition to a thickness of 0.69 mm and then stretching the resulting plaques in a laboratory stretching apparatus manufactured by the T.M. Long Company. The plaque was biaxially stretched at temperatures of about 160°C in the following sequential fashion: first, 400% at a rate of about 25,000% per minute in one direction, then 600% at a rate of 3,600% per minute perpendicular to the direction of initial stretching.

### Example 2

A single layer oriented film was prepared by first melt-blending 28.8 g of a polypropylene resin (melt flow index 4; heptane insolubles 94%) with 7.2 g of a copolymer of 1-butene and ethylene containing about 2 mole percent ethylene. This polymer blend was then transformed into a film through the molding and stretching procedures set forth in Example 1.

### Example 3

A single layer oriented film was prepared according to the procedures set forth in Example 2, except that the polypropylene resin employed had a melt flow index of about 1.

### Example 4

A single layer oriented film was prepared by first melt-blending 21.6 g of polypropylene resin (melt flow index 4; heptane insulubles 94%) with 7.2 g of the ethylene/butene copolymer of Example 2 and 7.2 g of a random ethylene/propylene copolymer (melt flow index 4.5; 3 mole percent ethylene). The blend was then transformed into a film through the molding and stretching procedures set forth in Example 1.

### Example 5

A single layer oriented film was prepared by first melt-blending 18.0 g of polypropylene resin (melt flow index 4; heptane insolubles 94%) with 9.0 g of the ethylene/butene copolymer of Example 2 and 9.0 g of ethylene/propylene copolymer (1.0 mole percent ethylene). The blend was then transformed into a film through the molding and stretching procedures set forth in Example 1.

### Example 6

A single layer oriented film was prepared from 36.0 g of a random ethylene/propylene copolymer (2 mole percent ethylene) through the molding and stretching procedures set forth in Example 1.

### Example 7

A single layer oriented film was prepared by first melt-blending 32.4 g of random ethylene/propylene copolymer (2 mole percent ethylene) and 3.6 g of the ethylene/butene copolymer of Example 2. The blend was then transformed into a film through the molding and stretching procedures set forth in Example 1.

F-0414                           -7-

## Example 8

A single layer oriented film was prepared by first melt-blending 28.8 g of random ethylene/propylene copolymer (2 mole percent ethylene) and 7.2 g of the ethylene/butene copolymer of Example 2. The polymer blend was then transformed into a film through the molding and stretching procedures set forth in Example 1.

## Example 9

A single layer oriented film was prepared by first melt-blending 25.2 g of random ethylene/propylene copolymer (2 mole percent ethylene) and 7.2 g of the ethylene/butene copolymer of Example 2. The blend was then transformed into a film through the molding and stretching procedures set forth in Example 1.

The films of each of the above examples were tested for sealability at various temperatures in a crimp seal tester wherein both sealing jaws are serrated and heated. A dwell time of 0.75 sec. at a pressure of 1400 $g/cm^2$ was employed. The seal strength results are shown in Table 1.

## Table 1

| °C | 116°C | 121°C | 126°C | 132°C | 138°C | 143°C | 149°C |
|---|---|---|---|---|---|---|---|
| EXAMPLE | | | | | | | |
| 1 | - | - | 0 | 0 | 20 | 10 | 20 |
| 2 | - | 40 | 50 | 25 | - | - | - |
| 3 | 60 | 75 | 75 | 100 | - | - | - |
| 4 | - | 60 | 80 | 95 | - | - | - |
| 5 | 90 | 155 | 160 | 130 | - | - | - |
| 6 | - | 40 | 25 | 25 | 40 | 90 | 160 |
| 7 | - | 50 | 65 | 105 | - | - | - |
| 8 | - | 155 | 195 | 250 | - | - | - |
| 9 | - | 300 | 355 | 325 | - | - | - |

CRIMP SEAL STRENGTH VS. SEALING TEMPERATURE

As is apparent from the data presented in Table 1, the films of Examples 2-5 and 7-9, which form the substrate layer of the claimed laminate, exhibit excellent crimp seal strengths at normal heat sealing temperatures in contrast to the prior art films of Examples 1 and 6.

### Examples 10-16

Each of the blends of Examples 1-7 is extrusion coated with a heat-sealable surface layer of a copolymer of 1-butene and ethylene in which the ethylene content is 2 mole percent. The substrate is preformed by extrusion of the blend, solidified, heated to a temperature of 130°-145°C, stretched 6X in the machine direction and then extrusion coated with the copolymer of 1-butene and ethylene containing about 2 mole percent of ethylene. The coated material is then stretched transversely 8X at a temperature of 150°-160°C. The coated material has a film thickness of about 0.032 mm and the heat sealable surface layer comprises about 1.5% of the total film thickness. Each of the coated films exhibits a strong seal between the coated surfaces and a weaker seal between the substrate surfaces after those heat sealing at an appropriate temperature in the range of 115°C to 150°C.

CLAIMS:

1. A two-layer, heat-sealable biaxially oriented film comprising

(a) a substrate layer which forms 80-99% of the total film thickness comprising a blend of (1) from 0 to 85 weight percent of a polypropylene, (2) from 0 to 95 weight percent of a copolymer of propylene and ethylene containing up to 8 mole percent of ethylene, and (3) from 5 to 35 weight percent of poly(1-butene) or a copolymer of 1-butene and up to 10 mole percent of ethylene; and

(b) a second layer which has a lower melting point than the substrate layer forming 1-20% of the total film thickness comprising poly(1-butene) or a copolymer of 1-butene and up to 10 mole percent of ethylene.

2. The film of Claim 1 in which the substrate layer forms 90-99% of the total film thickness and the second layer forms 1-10% of the total film thickness.

3. The film of Claims 1 or 2 in which the substrate layer comprises a blend of 70 to 80 weight percent of (1) and 20-30 weight percent of (3).

4. The film of Claim 1 in which the substrate layer comprises a blend of 70-90 weight percent of (2) and 10-30 weight percent of (3).

5. The film of Claims 1 or 2 in which the substrate layer comprises 50-60 weight percent of (1), 20-25 weight percent of (2) and 20-25 weight percent of (3).

6. The film of Claims 1 through 5 in which (b) is poly(1-butene).

7.  The film of Claims 1 through 5 in which (b)
is a copolymer of 1-butene and ethylene containing 1-5
mole percent of ethylene.

8.  The film of Claim 1 in which the substrate
layer comprises 50-80 weight percent of (1), 10-25 weight
percent of (2) and 10-25 weight percent of (3).

0320n